# FASCICULE DE BREVET EUROPEEN

(11) **EP 1 072 826 B1**
(45) Date de publication et mention de la délivrance du brevet: **29.09.2004**
(21) Numéro de dépôt: 00402058.2
(22) Date de dépôt: 19.07.2000
(51) Int. Cl.: F16H 63/32, F16H 63/38

(54) **Fourchette de changement de vitesse pour boîte de vitesses d'un véhicule automobile**
Schaltgabel für Getriebe eines Kraftfahrzeuges
Shift fork for a gearbox of a motor vehicle

(30) Priorité: 27.07.1999 FR 9909731
(43) Date de publication de la demande: 31.01.2001
(73) Titulaire: Peugeot Citroen Automobiles SA, 92200 Neuilly sur Seine (FR)
(72) Inventeur: Bertolino, Walter, 78780 Maurecourt (FR)
(74) Mandataire: Thinat, Michel

(56) Documents cités:
- FR-A- 2 762 659
- GB-A- 983 398
- US-A- 1 585 935
- US-A- 4 541 510
- PATENT ABSTRACTS OF JAPAN vol. 008, no. 042 (P-256), 23 février 1984 (1984-02-23) & JP 58 195222 A (KOUWA SEIKOU KK), 14 novembre 1983 (1983-11-14)

## Description

La présente invention concerne une fourchette de changement de vitesse pour boîte de vitesses d'un véhicule automobile.

Elle vise également une boîte de vitesses pour véhicule automobile comprenant au moins une telle fourchette.

Le dispositif de commande interne de changement de vitesse d'une boîte de vitesses actuellement connu comprend deux ou trois axes de commande de fourchettes de changement de vitesse suivant le nombre de vitesses sélectionnables du véhicule. Chaque axe de commande, qui s'étend parallèlement à l'arbre primaire portant les pignons moteurs de vitesse, est solidaire de la fourchette correspondante et déplaçable dans sa direction longitudinale pour amener la fourchette à déplacer le manchon qui lui est associé.

Généralement, l'ensemble constitué par l'axe de commande et la fourchette de changement de vitesse est réalisé en une seule pièce par moulage, se traduisant alors par des coûts de production relativement élevés.

US-A-4 541 510 décrit une fourchette de changement de vitesse pour boîte de vitesses de véhicule automobile conforme au préambule de la revendication 1.

Cependant, cette fourchette est relativement complexe puisqu'elle nécessite des passages internes d'huile de lubrification pour assurer le coulissement de la fourchette et un axe de guidage faisant saillie du sommet de l'étrier de la fourchette.

FR-A-2 762 659 décrit également une fourchette de boîte de vitesses montée coulissante sur un axe.

Cependant, cette fourchette comporte un guide tubulaire propre à coulisser sur l'axe et qui est fixé par soudage à la partie centrale de la fourchette.

La présente invention a pour but d'éliminer les inconvénients ci-dessus en proposant une fourchette de changement de vitesse d'une conception simple et de faible coût.

A cet effet, l'invention propose une fourchette de changement de vitesse pour boîte de vitesses d'un véhicule automobile comprenant les caractéristiques énoncées dans la partie caractérisante de la revendication 1.

Avantageusement, chacune des deux bandes extrêmes de la bride est à convexité d'arceau orientée radialement vers l'intérieur de l'étrier et la bande centrale est à convexité d'arceau orientée radialement vers le sommet de l'étrier.

La fourchette comprend en outre un tube cylindrique engagé à force entre les trois bandes de la bride et destiné à recevoir l'axe de support sur lequel peut coulisser le tube cylindrique.

Le tube cylindrique comprend un perçage radial qui est situé en regard du trou central de la bande centrale de la bride pour recevoir en partie la bille d'indexation.

La fourchette est réalisée en tôle en une seule pièce. L'invention propose également un ensemble de commande de changement de vitesse pour boîte de vitesses du véhicule automobile et qui est caractérisé en ce qu'il comprend une fourchette de changement de vitesse et un axe de support tel que défini précédemment, l'axe de support étant fixé aux carters de boîte de vitesses et d'embrayage du véhicule.

L'invention propose enfin une boîte de vitesses pour véhicule automobile qui est caractérisée en ce qu'elle comprend au moins un ensemble à fourche et axe de changement de vitesse tel que défini précédemment.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention.

La figure 1 est une vue en perspective d'une fourchette de changement de vitesse conforme à l'invention.

La figure 2 est une vue en perspective de la fourchette de la figure 1 associée à un baladeur de changement de vitesse.

La figure 3 est une vue en coupe suivant le plan médian transversal de la fourchette de la figure 1.

Les figures 4 et 5 représentent deux vues en perspective de la fourchette de la figure 1 et qui est bridée sur son axe de support correspondant.

La figure 6 est une vue en coupe suivant le plan médian transversal de la fourchette représentée en figure 4 ou 5.

La figure 7 est une vue partielle en perspective de l'axe de support de la fourchette des figures 4 et 5.

La figure 8 est une vue en perspective d'une fourchette suivant une variante de réalisation de l'invention.

Les figures 9 et 10 représentent deux vues en perspective de la fourchette de la figure 8 montée sur l'axe de support correspondant.

La figure 11 est une vue en coupe suivant le plan médian transversal de la fourchette de la figure 9 ou 10.

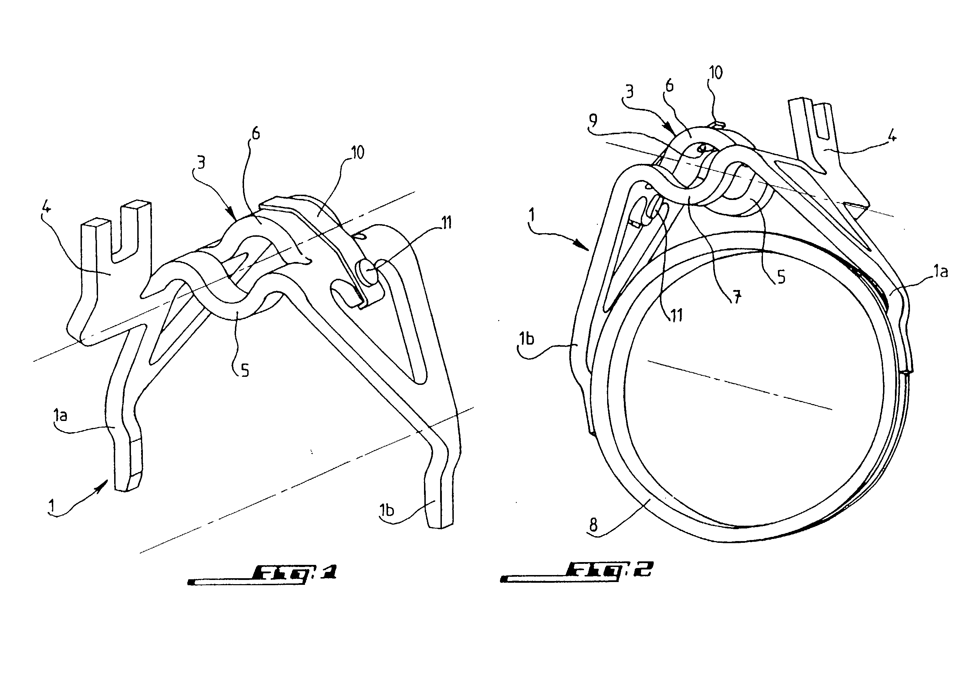

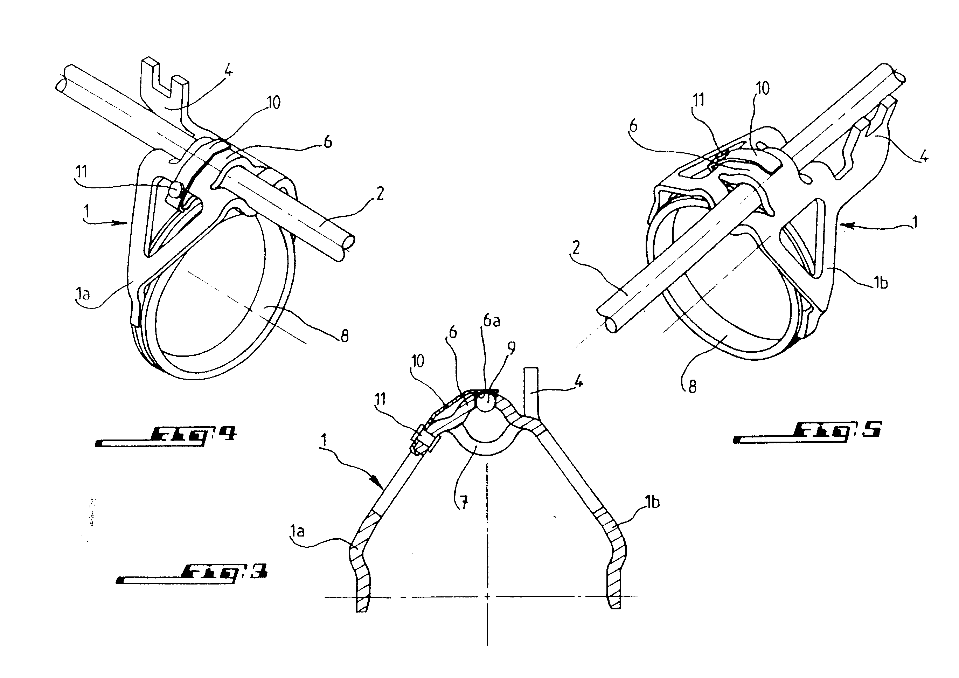

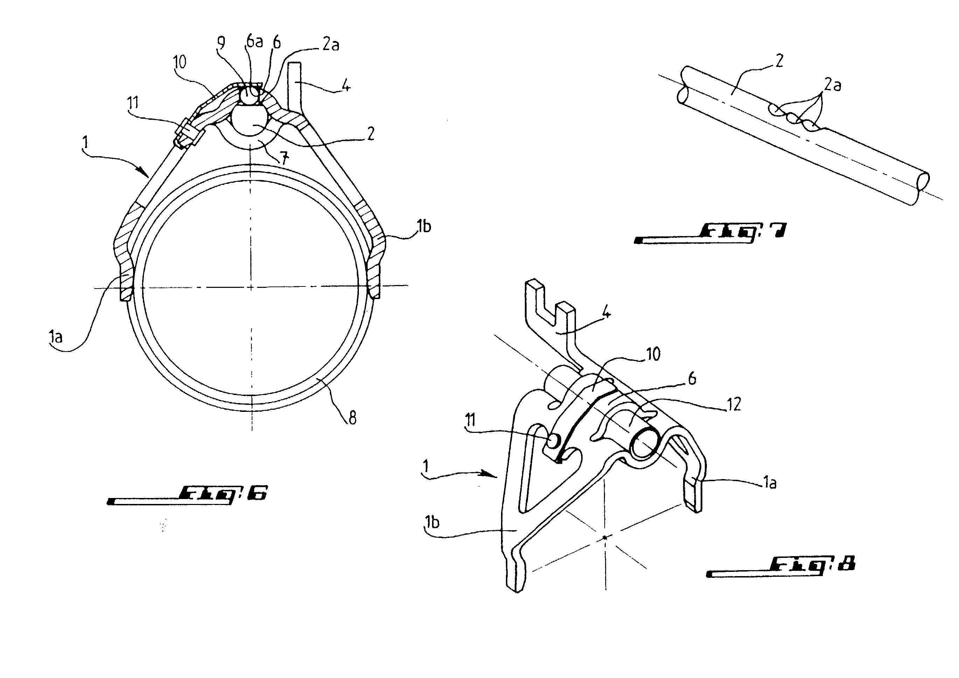

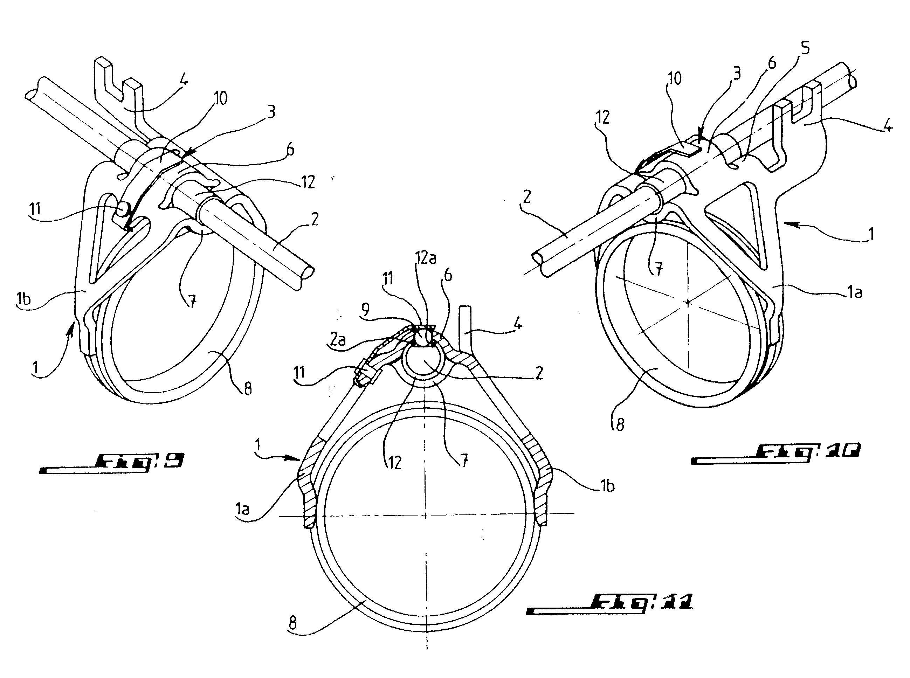

En se reportant aux figures 1 à 7, la référence 1 désigne une fourchette de changement de vitesse pour une boîte de vitesses d'un véhicule automobile.

Selon l'invention, la fourchette 1 est en forme d'étrier et réalisée en tôle en une seule pièce.

Comme représenté, la fourchette 1 a son sommet agencé de façon à servir de bride 3 de fixation de la fourchette à un axe de support 2 le long duquel elle peut être déplacée par coulissement par l'intermédiaire de la crosse 4 solidaire de la fourchette 1 et qui est reliée mécaniquement au levier de sélection de vitesse du véhicule.

La bride de fixation 3 comprend trois bandes parallèles 5, 6, 7 constituant la partie de raccordement des deux branches 1a, 1b de la fourchette 1 et dont les extrémités libres peuvent être engagées dans une gorge d'un baladeur 8 de changement de vitesse. Les bandes 5, 6, 7 de la bride 3 s'étendent de façon sensiblement parallèle au plan des deux branches 1a, 1b de l'étrier et chacune des deux bandes extrêmes 5, 7 est déformée en arceau à convexité orientée radialement vers l'intérieur de l'étrier, tandis que la bande centrale 6 est également déformée en arceau à convexité orientée radialement vers le sommet de cet étrier. Bien entendu, les deux bandes extrêmes 5, 7 peuvent avoir leur convexité d'arceau orientée radialement vers le sommet de l'étrier, tandis que la bande centrale 6 aura sa convexité d'arceau orientée vers l'intérieur de cet étrier. De préférence, la bande centrale 6 et les deux bandes extrêmes 5, 7 ainsi que les deux branches 1, 1b sont symétriques par rapport au plan médian transversal de l'étrier de la fourchette 1.

L'axe de support 2 de la fourchette 1 est fixé par ses deux extrémités respectivement dans les deux carters de boîte de vitesses et d'embrayage (non représentés) du véhicule et comporte trois crans ou entailles successives 2a usinées le long d'une même génératrice de l'axe 2 et coopérant avec une bille 9 d'indexation de la fourchette 1 à l'axe 2 de façon à immobiliser la fourchette 1 à sa position choisie de passage d'une vitesse. Ainsi, en position inactive de la fourchette 1, la bille d'indexation 9 sera engagée dans le cran central 2a alors qu'elle sera logée dans l'un ou l'autre des deux autres crans 2a en position de passage d'une vitesse correspondante, qui peut être par exemple la troisième ou la quatrième vitesse.

Comme cela ressort mieux des figures 3 et 6, la bille d'indexation 9 est logée dans un trou central 6a traversant la bande centrale 6 de la bride 3 et est rappelée élastiquement dans l'un des crans 2a de l'axe 2 par un organe élastique 10 formé d'une lame ressort dont l'une des extrémités est fixée à la bande centrale 6, pratiquement au niveau de son raccordement à l'une la des branches de la fourchette 1, par l'intermédiaire d'un organe de fixation 11, tel qu'un rivet ou analogue. L'autre extrémité de la lame ressort 10 est élastiquement en appui sur la bille d'indexation 9 pour la rappeler constamment vers l'axe 2.

La variante de réalisation de la fourchette 1 telle que représentée aux figures 8 à 11 ne diffère de celle des figures 1 à 7 que par l'adjonction d'un tube cylindrique 12 engagé à force entre les trois bandes 5, 6, 7 de la bride 3 et qui est destiné à recevoir l'axe de support 2 comme représenté aux figures 9 à 11 de façon que la fourchette 1 puisse coulisser à une position choisie sur l'axe 2. Cet agencement permet une meilleure précision de guidage de la fourchette 1 le long de l'axe 2. Bien entendu, le tube 12 comporte un perçage radial 12a situé en regard du trou traversant 6a de la bande centrale 6 de façon à permettre le passage d'une partie de la bille dans le cran correspondant 2a de l'axe de support 2.

L'ensemble constitué par la fourchette 1 et l'axe de support 2 est d'une conception extrêmement simple et comporte un nombre de pièces réduit, ce qui permet d'en réduire les coûts de fabrication. Les boîtes de vitesses de véhicules automobiles peuvent ainsi être équipées de plusieurs ensembles à fourchettes et axes de changement de vitesse tels que décrits précédemment.

## Revendications

1. Fourchette de changement de vitesse pour boîte de vitesses d'un véhicule automobile, laquelle fourchette est en forme d'étrier (1) dont le sommet sert de bride (3) de fixation de la fourchette (1) à un axe de support (2), la fourchette (1) étant déplaçable par coulissement le long de l'axe de support (2), **caractérisée en ce que** la bride de fixation (3) comprend trois bandes parallèles déformées en arceau (5, 6, 7) s'étendant sensiblement parallèlement au plan des deux branches (1a, 1b) de l'étrier, chacune des deux branches extrêmes (5, 7) de la bride (3) étant à convexité d'arceau orientée radialement vers le même sens, tandis que la branche centrale (6) de la bride (3) est à convexité d'arceau orientée en sens inverse, et **en ce que** la bande centrale (6) de la bride (3) comprend un trou central traversant (6a) dans lequel peut être logée une bille (9) d'indexation de la fourchette (1) pouvant coopérer avec des crans successifs (2a) de l'axe de support (2) de la fourchette (1) et une lame ressort (10) fixée à une extrémité, par exemple par rivet (11) ou analogue, sur la bande centrale (6) et dont l'autre extrémité est destinée à venir en appui sur la bille d'indexation (9) pour la plaquer élastiquement dans un cran correspondant (2a) de l'axe de support (2).

2. Fourchette selon la revendication 1, **caractérisée en ce que** chacune des deux branches extrêmes (5, 7) précitées est à convexité d'arceau orientée radialement vers l'intérieur de l'étrier et la bande centrale (6) est à convexité d'arceau orientée radialement vers le sommet de l'étrier.

3. Fourchette selon la revendication 1 ou 2, **caractérisée en ce qu'**elle comprend en outre un tube cylindrique (12) engagé à force entre les trois bandes (5, 6, 7) de la bride (3) et destiné à recevoir l'axe de support (2) sur lequel peut coulisser le tube cylindrique (12).

4. Fourchette selon la revendication 3, lorsque considérée en combinaison avec la revendication 2, **caractérisée en ce que** le tube cylindrique (12) comprend un perçage radial (12a) qui est situé en regard du trou central (6a) de la bande centrale (6) de la bride (3) pour recevoir en partie la bille d'indexation (9).

5. Fourchette selon l'une des revendications précédentes, **caractérisée en ce qu'**elle est réalisée en tôle et en une seule pièce.

6. Ensemble de commande de changement de vitesse pour boîte de vitesses de véhicule automobile, **caractérisé en ce qu'**il comprend une fourchette (1) de changement de vitesse et un axe de support (2) de la fourchette (1) tels que définis dans l'une quelconque des revendications précédentes, et **en ce que** l'axe de support (2) est fixé aux carters de boîte de vitesses et d'embrayage du véhicule.

7. Boîte de vitesses pour véhicule automobile, **caractérisée en ce qu'**elle comprend au moins un ensemble à fourchette (1) et axe (2) de changement de vitesse tel que défini en revendication 6.

## Patentansprüche

1. Schaltgabel für das Getriebe eines Kraftfahrzeugs, welche in Form eines Bügels (1) ausgebildet ist, dessen Scheitel als Befestigungsklammer (3) für die Schaltgabel (1) mit einer Stützachse (2) dient, wobei die Schaltgabel (1) entlang der Stützachse (2) gleitend verschieblich ist, **dadurch gekennzeichnet, dass** die Befestigungsklammer /3) drei parallele bügelförmig gebogene Bänder (5, 6, 7) aufweist, die sich im Wesentlichen parallel zur Ebene der beiden Schenkel (1a, 1b) des Bügels erstrecken, wobei jeder der beiden außen liegenden Schenkel des Bügels die Form eines konvexen Bogens aufweist, der in radialer Richtung in gleicher Richtung ausgerichtet ist, wohingegen der mittlere Schenkel (6) des Bügels in Form eines konvexen Bogens ausgebildet ist, der in umgekehrter Richtung ausgerichtet ist, und dass das mittlere Band (6) der Befestigungsklammer (3) eine durchgehende Mittelöffnung (6a) aufweist, in welcher eine Kugel (9) zum Weiterschalten der Schaltgabel (1) gelagert sein kann, welche mit den aufeinander folgenden Kerben (2a) auf der Schaltgabel (1) zusammenwirken kann, sowie eine Blattfeder (10), die an einem Ende, beispielsweise mittels eines Niets (11) oder gleichen, auf den Mittelstreifen (6) befestigt ist, während ihr anderes Ende dazu bestimmt ist, in Anlage gegen die Schaltkugel (9) zu kommen, um diese elastisch in eine entsprechende Kerbe (2a) auf der Stützachse (2) flächig zu spannen.

2. Schaltgabel nach Anspruch 1, **dadurch gekennzeichnet, dass** jeder der beiden außen liegenden Schenkel (5, 7) eine in radialer Richtung zur Innenseite des Bügels hin ausgerichtete konvex-bogenförmige Ausbildung aufweist und der Mittelstreifen (6) eine radial zum Scheitel des Bügels hin ausgerichtete konvex-bogenförmige Ausbildung besitzt.

3. Schaltgabel nach Anspruch 1 oder 2, **dadurch gekennzeichnet, dass** sie des Weiteren ein zylinderförmiges Rohr (12) aufweist, das zwischen die drei Bänder (5, 6, 7) der Befestigungsklammer (3) eingedrückt ist und dazu dient, die Stützachse (2), auf welcher das zylindrische Rohr (12) gleitend angeordnet ist, aufzunehmen.

4. Schaltgabel nach Anspruch 3 bei Berücksichtigung in Verbindung mit Anspruch 2, **dadurch gekennzeichnet, dass** das zylinderförmige Rohr (12) eine radiale Bohrung (12a) aufweist, die gegenüber der Mittelöffnung (6a) im Mittelstreifen (6) der Befestigungsklammer (3) liegt und die Kugel (9) zum Weiterschalten teilweise aufnimmt.

5. Schaltgabel nach einem der vorhergehenden Ansprüche, **dadurch gekennzeichnet, dass** sie aus Bloch und in einem Stück hergestellt ist.

6. Betätigungseinheit für die Gangschaltung eines Getriebes bei Kraftfahrzeugen, **dadurch gekennzeichnet, dass** sie eine Schaltgabel (1) und eine Stützachse (2) zum Abstützen der Schaltgabel (1) aufweist, wie diese in einem der vorhergehenden Ansprüche definiert sind, und dass die Stützachse (2) an dem Getriebegehäuse und dem Kupplungsgehäuse des Fahrzeugs befestigt ist.

7. Gangschaltung für Kraftfahrzeuge, **dadurch gekennzeichnet, dass** sie mindestens eine Schaltgabelbaugruppe (1) mit einer Gangschaltachse (2) aufweist, wie diese in Anspruch 6 definiert sind.

## Claims

1. Clutch fork for a gearbox of a motor vehicle, the fork concerned being in the form of a stirrup (1) the top of which serves as a strap (3) of attachment of the fork to a support shaft (2), the fork being able to move by sliding along the support shaft (2), **characterized in that** the attachment strap (3) comprises three parallel arched bands (5, 6, 7) extending in a direction appreciably parallel to the plane of the two branches (1a, 1b) of the stirrup, both of the two end branches (5, 7) of the strap (3) being in convex, arched form and radially aligned in the same direction, and **in that** the central band (6) of the strap (3) has a central hole (6a) in which can lodge an indexing spherule (9) of the fork (1) able to function in conjunction with the successive notches (2a) of the support shaft (2) of the fork (1) and a spring plate (10) attached at one end, by means of a rivet or suchlike for example, to the central band (6), the other end coming to rest on the indexing spherule (9) to elastically press it into a corresponding notch (2a) of the support shaft (2).

2. Fork in accordance with claim 1, **characterized in that** each of the forementioned two end branches (5, 7) is in convex, arched form, radially orientated towards the inside of the stirrup and the central band (6) has a convex, arched form radially orientated towards the top of the stirrup.

3. Fork in accordance with claims 1 or 2, **characterized in that** it further has a cylindrical tube (12) engaging under force between the three bands (5, 6, 7) of the strap (3) and there to receive the support shaft (2) on which the cylindrical tube (12) can slide.

4. Fork in accordance with claim 3, considered in combination with claim 2, **characterized in that** the cylindrical tube (12) has a radial boring (12a) that is located facing the central hole (6a) of the central band (6) of the strap (3), to partly receive the indexing spherule (9).

5. Fork in accordance with one of the preceding claims, **characterized in that** it is implemented in sheet metal and as a single piece.

6. Gearbox clutch control unit for a motor vehicle, **characterized in that** it comprises a clutch fork (1) and a support shaft (2) of the fork (1) as defined in any one of the preceding claims, and **in that** the support shaft (2) is fixed to the gearbox casing and clutch casing of the vehicle.

7. Gearbox for a motor vehicle, **characterized in that** it includes at least one unit of a fork (1) and gearchange shaft (2) as defined in claim 6.
